# EUROPEAN PATENT SPECIFICATION

(11) **EP 2 685 110 B1**
(45) Date of publication and mention of the grant of the patent: **14.09.2016**
(21) Application number: 11860149.1
(22) Date of filing: 07.03.2011
(51) Int. Cl.: E02F 5/10, E02F 9/22

(54) **HYDRAULIC CIRCUIT FOR PIPE LAYER**
HYDRAULISCHER KREISLAUF FÜR ROHRLEITUNGSSCHICHT
CIRCUIT HYDRAULIQUE POUR DISPOSITIF DE POSE DE TUYAU

(43) Date of publication of application: 15.01.2014
(73) Proprietor: Volvo Construction Equipment AB, 631 85 Eskilstuna (SE)
(72) Inventor: JEON, Man-Seuk, Changwon-si Gyeongsangnam-do 642-777 (KR); CHOI, Han-Ok, Changwon-si Gyeongsangnam-do 630-786 (KR)
(74) Representative: Epping - Hermann - Fischer
(86) International application number: PCT/KR2011/001536
(87) International publication number: WO 2012/121427

(56) References cited:
- EP-A1- 2 151 526
- EP-A2- 2 147 886
- JP-A- 05 132 977
- JP-A- 2010 030 781
- KR-A- 20110 007 639
- KR-B1- 100 225 979

## Description

### FIELD OF THE INVENTION

The present invention relates to a hydraulic circuit for a pipe layer employing a negative flow control system. More particularly, the present invention relates to a hydraulic circuit for a pipe layer, in which when an actuator (or a boom cylinder, or the like) for work apparatus is finely manipulated in a pipe-laying operation mode (PL mode: a work mode in which a pipeline or the like is lifted and transported to a burial place), a hydraulic shock can be prevented from occurring.

### BACKGROUND OF THE INVENTION

The above negative flow control system refers to a system in which when a pilot signal pressure generated from a pilot signal pressure-generating means installed at the downstream side of a center bypass path is high at the upstream side of the center bypass path, a discharge flow rate of a variable displacement hydraulic pump is controlled to be decreased whereas when the pilot signal pressure generated from a pilot signal pressure-generating means is low at the upstream side of the center bypass path, the discharge flow rate of the variable displacement hydraulic pump is controlled to be increased.

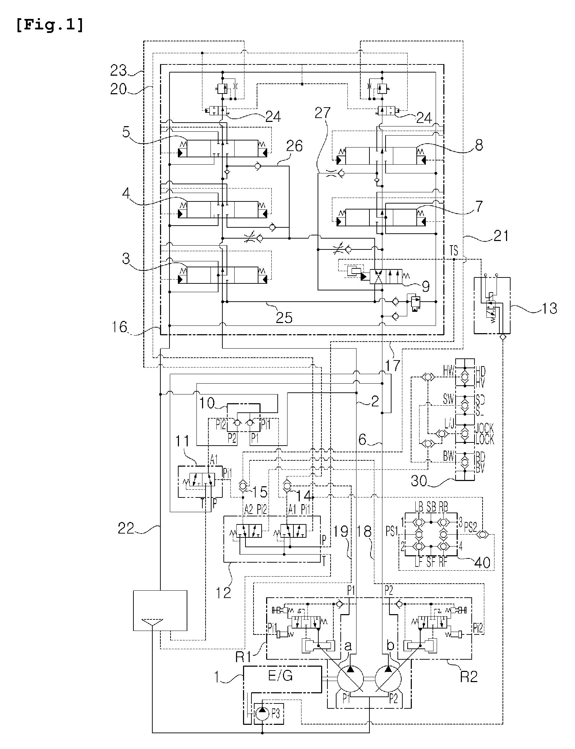

A conventional hydraulic circuit for a pipe layer in accordance with the prior art as shown in Fig. 1 includes:
first and second variable displacement hydraulic pumps (hereinafter, referred to as "first and second hydraulic pumps") P1 and P2 and a pilot pump P3, which are configured to be connected to an engine 1;
one or more first control valves 3, 4 and 5 installed in a center bypass path (cbp) 2 of the first hydraulic pump P1 and configured to be shifted to control a flow direction and a flow rate of a hydraulic fluid that is supplied to a left traveling motor and a first work apparatus (or a swing motor, a winch motor, or the like);
one or more second control valves 7 and 8 installed in a center bypass path 6 of the second hydraulic pump P2 and configured to be shifted to control a flow direction and a flow rate of a hydraulic fluid that is supplied to a right traveling motor and a second work apparatus (or a boom cylinder or the like);
a straight traveling valve 9 installed at the upstream side of the center bypass path 6 of the second hydraulic pump P2, and configured to be shifted by a pilot signal pressure Pi from the pilot pump P3 to cause the hydraulic fluid discharged from the first hydraulic pump P1 to be distributed and supplied to the control valves 3 and 7 for the left and right traveling motors and to cause the hydraulic fluid discharged from the second hydraulic pump P2 to be distributed and supplied to the control valves 4, 5 and 8 for the first and second work apparatuses to thereby prevent one-way traveling when a combined operation mode for simultaneously driving the work apparatus and a traveling apparatus is selected;
an unloading valve 10 configured to be shifted by the pilot signal pressure that shifts the straight traveling valve 9 so that when the unloading valve is opened, the straight traveling valve 9 is shifted to prevent an overload from occurring in the center bypass paths 2 and 6 of the first and second hydraulic pumps P1 and P2;
one or more pilot valves 11 and 12 configured to release an unloading function of the unloading valve 10 when any one of the control valves 4, 5 and 8 for the work apparatuses and the control valves 3 and 7 for the traveling motors is driven in a shift mode in which the straight traveling valve 9 is shifted;
an operation mode switching valve 13 configured to be shifted in response to an electrical signal applied thereto from the outside when a combined operation mode for simultaneously driving the work apparatus and the traveling apparatus is selected to cause the pilot signal pressure from the pilot pump P3 to be supplied to the straight traveling valve 9 and the pilot valves 11 and 12, respectively; and
a first shuttle valve 14 configured to control a swivel angle of a swash plate (a) of the first hydraulic pump P1 by a pressure selected from among a pilot signal pressure Pi1 supplied to the pilot valve 12 and a pressure at the downstream side of the center bypass path 2 of the first hydraulic pump P1, and a second shuttle valve 15 configured to control a swivel angle of a swash plate (b) of the second hydraulic pump P2 by a pressure selected from among a pilot signal pressure Pi2 supplied to the pilot valve 12 and a pressure at the downstream side of the center bypass path 6 of the second hydraulic pump P2.

In the drawings, a non-explained reference numeral 24 denotes cbp spools respectively installed at downstream sides of the center bypass paths 2 and 6, and a non-explained reference numeral 16 denotes a main control valve (MCV).

The operation of a hydraulic circuit for a pipe layer to which the negative flow control system as constructed above will be described hereinafter with reference to the accompanying drawings.

The hydraulic fluids discharged from the first hydraulic pump P1 and the second hydraulic pump P2 are dividedly supplied to the main control valve (MCV) 16 and the unloading valve 10 via the center bypass paths 2 and 6, respectively. The unloading valve 10 is not used in an excavation operation mode of the equipment, but is used when a pipe-laying operation (PL) mode signal is activated.

In the pipe-laying operation mode, when the operation mode switching valve 13 is shifted, the straight traveling valve 9 is shifted to a state shown in FIG. 1 by the pilot signal pressure supplied to a port Ts (referring to a signal pressure port formed at the main control valve 16 to shift the straight traveling valve 9) from the pilot pump P3

As a result, a part of the hydraulic fluid discharged from the first hydraulic pump P1 is supplied to the control valve 3 via the center bypass path 2 to drive the left traveling motor. At the same time, a part of the hydraulic fluid discharged from the first hydraulic pump P1 is supplied to the control valve 7 through the shifted straight traveling valve 9 via the center bypass path 2 and a flow path 25 to drive the right traveling motor.

On the other hand, a part of the hydraulic fluid discharged from the second hydraulic pump P2 is supplied to the control valves 4 and 5 via the center bypass path 6, the straight traveling valve 9, and the flow path 26 to drive the first work apparatus (or a swing motor or the like). At the same time, a part of the hydraulic fluid discharged from the second hydraulic pump P2 is supplied to the control valve 8 via the center bypass path 6 and the flow path 27 to drive the second work apparatus (or a boom cylinder or the like).

As described above, when the operation mode switching valve 13 manipulated by an operator during the pipe-laying operation, the straight traveling valve 9 is shifted by the pilot signal pressure supplied from the pilot pump P3 to cause the hydraulic fluid discharged from the first hydraulic pump P1 to be distributed and supplied to the left and right traveling motors and the hydraulic fluid discharged from the second hydraulic pump P2 to be distributed and supplied to the work apparatus (or a boom cylinder or the like).

Therefore, in the pipe-laying operation mode, when the work apparatus and the traveling apparatus are driven simultaneously, the traveling speed can be prevented from being changed abruptly due to a difference in a load occurring in the work apparatus or the traveling apparatus

In the meantime, a signal pressure (40kg/cm²) is applied to the unloading valve 10 from the pilot valve 12 to open the unloading valve 10 by the signal pressure supplied to the pilot valve 12 through a signal line 17 connected to the port Ts. At the same time, the signal pressures of the outlet ports A1 and A2 of the pilot valve 12 are supplied to the ports Pi1 and Pi2 of the via the signal lines 18 and 19 after passing through the first and second shuttle valves 14 and 15 installed at the downstream side of the pilot valve 12, respectively. As a result, the swivel angles of the swash plates (a and b) of the first and second hydraulic pumps P1 and P2 is controlled by the regulators R1 and R2 to minimize the discharge flow rate of the first and second hydraulic pumps P1 and P2.

In addition, the hydraulic fluid of signal lines 20 and 21 discharged from the main control valve 16 is set to be introduced into the first and second shuttle valves 14 and 15 to minimize the discharge flow rate of the first and second hydraulic pumps P1 and P2.

This state is defined as a neutral state of the pipe-laying operation mode.

In this case, in the neutral state of the pipe-laying operation mode, when signals (i.e., a manipulation signal by an attachment control joystick and a manipulation signal by a travel control pedal) of attachment switching devices (for example, a hoist winch (HW), a swing (SW), a boom (BM) and a circuit in which the ports PS1 and PS2 are indicated) 30 and 40 is activated, the pilot valve 12 is shifted with Pi1 by the hydraulic fluid (having a pressure of 40k/cm² or so) applied at the port PS2 (or PS1) of the attachment switching device 40. At the same time, the valve spools (or cbp spools) 24 of the main control valve 16 are shifted through the signal line 20.

When the valve spools 24 are shifted, respectively, the hydraulic fluid introduced into the main control valve 16 from the first hydraulic pump P1 and supplied to the hydraulic tank T, and the hydraulic fluid introduced into the main control valve 16 from the second hydraulic pump P2 and supplied to the hydraulic tank T are blocked, respectively.

When the pilot valve 12 is shifted, the hydraulic fluid of the port Ts is blocked at the pilot valve 12, and the hydraulic fluid of the port Pi1 disappears while flowing along a tank line 22 from the port A1 by the shifted pilot valve 12. In this case, the pressure applied to the first shuttle valve 14 at the downstream side of the port A1 also disappears simultaneously. As a result, when the pressure of the signal line 19 is reduced to cause the pressure of the port Pi1 of the first hydraulic pump P1 to be reduced to maximally control the discharge flow rate of the first hydraulic pump P1. At the same time, when the valve spools 24 of the main control valve 16 are shifted, the hydraulic fluid of a signal line 23 of the main control valve 16 is blocked and thus the pressure of the port Pi1 of the first hydraulic pump P1 is reduced via the first shuttle valve 14 to maximally control the discharge flow rate of the first hydraulic pump P1. At this time, the hydraulic fluid flowing to the hydraulic tank T from the port P1 of the unloading valve 10 is blocked.

On the other hand, when a signal of the attachment switching device (for example, BM or SW) 30 is activated, the attachment switching device 30 is connected to the Pi2 of the pilot valve 12 to shift the pilot valve 12 to the left on the drawing sheet. At this same time, the pressure of the port A2 of the pilot valve 12 and the pressure of the port Pi1 of the pilot valve 11 nearly disappear. The port A1 of the pilot valve 11 and the port Pi1 of the unloading valve 10 are connected to the tank line 22, and thus the pressures of the port A1 of the pilot valve 11 and the port Pi1 of the unloading valve 10 disappear. In this case, the ports P2 and T of the unloading valve 10 are blocked. At the same time, the pressure of the port A2 of the pilot valve 12 disappears, and thus the pressure of the signal line disappears so that the discharge flow rate of the second hydraulic pump P2 is controlled to be discharged maximally. At this time, the maximally discharged hydraulic fluid is supplied to each attachment switching device.

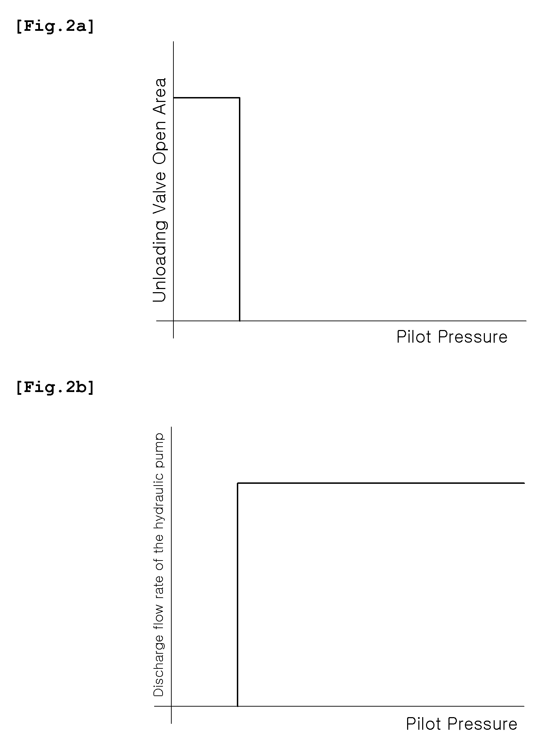

In the meantime, the unloading valve 10 of a poppet type controls the flow rate of the hydraulic fluid in an ON/OFF manner by the pilot signal pressure applied from the outside. In other words, even if the pilot signal pressure of 1-40 kg/cm² is supplied to the ports Pi1 and Pi2 of the unloading valve 10, the flow rate is controlled in the ON/OFF manner. Therefore, when the unloading valve 10 is closed, a cross-sectional area of the closed aperture of a flow path is abruptly reduced to bring about a hydraulic shock (see FIG. 2 (a)). As a result, it can be found that even if a low pilot signal pressure is applied to the unloading valve 10, the flow rate of the hydraulic fluid discharged from the first hydraulic pump P1 and the second hydraulic pump P2 is suddenly increased (see FIG. 2(b)).

As described above, when the attachment is finely manipulated by a pilot check type unloading system in the pipe-laying operation mode, the center bypass path is blocked by the poppet closing of the unloading valve. For this reason, the conventional the hydraulic circuit for a pipe layer entails a problem in that the discharge flow rate of the hydraulic pumps is controlled to the maximum in terms of the characteristics of the negative flow control system to cause the pressure to rise due to the excessive flow rate of the hydraulic fluid discharged from the hydraulic pump, leading to generation of chattering.

Conventional hydraulic circuits for pipe layers are also known from documents EP 2151526 A1 and EP 2147886 A2.

### DETAILED DESCRIPTION OF THE INVENTION

### TECHNICAL PROBLEMS

Accordingly, the present invention has been made to solve the aforementioned problem occurring in the prior art, and it is an object of the present invention to provide a hydraulic circuit for a pipe layer, in which when a work apparatus or a traveling apparatus is finely manipulated during a combined operation in a pipe-laying operation mode, hydraulic shock in equipment due to an excessive flow rate of a hydraulic fluid discharged from the hydraulic pump is prevented from occurring, thereby improving manipulability.

### TECHNICAL SOLUTION

To accomplish the above object, in accordance with an embodiment of the present invention, there is provided a hydraulic circuit for a pipe layer, in which a discharge flow rate of a hydraulic pump is controlled by a negative flow control system, the hydraulic circuit including:
first and second hydraulic pumps and a pilot pump, which are configured to be connected to an engine;
one or more first control valves installed in a center bypass path of the first hydraulic pump and configured to be shifted to control a flow direction and a flow rate of a hydraulic fluid that is supplied to a left traveling motor and a first work apparatus;
one or more second control valves installed in a center bypass path of the second hydraulic pump and configured to be shifted to control a flow direction and a flow rate of a hydraulic fluid that is supplied to a right traveling motor and a second work apparatus;
a straight traveling valve installed at the upstream side of the center bypass path of the second hydraulic pump, and configured to be shifted by a pilot signal pressure from the pilot pump to cause the hydraulic fluid discharged from the first hydraulic pump to be distributed and supplied to the control valves for the left and right traveling motors and to cause the hydraulic fluid discharged from the second hydraulic pump to be distributed and supplied to the control valves for the first and second work apparatuses when a combined operation mode for simultaneously driving the work apparatus and a traveling apparatus is selected;
a pair of unloading valves configured to linearly control the closing of a flow path extending from the center bypass paths of the first and second hydraulic pumps to a hydraulic tank when the work apparatus or the traveling apparatus is finely manipulated in a pipe-laying operation mode;
a pilot valve configured to be shifted by the pilot signal pressure for shifting the straight traveling value to cause a signal pressure that corresponds to a manipulation signal of the traveling apparatus to be supplied to the unloading valve to close the flow path extending from the center bypass path of the first hydraulic pump to the hydraulic tank and to cause a signal pressure that corresponds to a manipulation signal of the work apparatus to be supplied to the unloading valve to close the flow path extending from the center bypass path of the second hydraulic pump to the hydraulic tank; and
an operation mode switching valve configured to be shifted in response to an electrical signal applied thereto from the outside when a combined operation mode for simultaneously driving the work apparatus and the traveling apparatus is selected to cause the pilot signal pressure from the pilot pump to be supplied to the straight traveling valve, the pilot valve, and valve spools installed at a downstream side of the center bypass paths of the first and second hydraulic pumps, respectively.

In accordance with a more preferable embodiment, each of the unloading valve may further include:
a valve spool configured to be shifted by a pilot signal pressure from the outside to linearly control the cross-sectional area of the closed aperture of the flow path extending in fluid communication from the center bypass path of the first or second hydraulic pump to the hydraulic tank T; and
a poppet 54 or 54a installed in a flow path between an outlet port of the valve spool and the hydraulic tank to open/close the flow path extending from the center bypass path of the first or second hydraulic pump to the hydraulic tank by a pressure formed in the center bypass path of the first or second hydraulic pump.

In accordance with a more preferable embodiment, each of the unloading valves may further include a notch portion formed at the valve spool and configured to linearly control the closing of the flow path extending from the center bypass path of the first or second hydraulic pump to the hydraulic tank when an attachment is minutely operated in the pipe-laying operation mode.

In accordance with a more preferable embodiment, the hydraulic circuit for a pipe layer may further include:
a first shuttle valve configured to control a swivel angle of a swash plate of the first hydraulic pump by a pressure selected from among a pilot signal pressure at the unloading valve side and a pressure at the downstream side of the center bypass path of the first hydraulic pump; and
a second shuttle valve configured to control a swivel angle of a swash plate of the second hydraulic pump by a pressure selected from among a pilot signal pressure at the unloading valve and a pressure at the downstream side of the center bypass path of the second hydraulic pump.

### ADVANTAGEOUS EFFECT

The hydraulic circuit for a pipe layer in accordance with an embodiment of the present invention as constructed above has the following advantages.

It is possible to prevent chattering and occurrence of hydraulic shock in equipment due to a pressure rise caused by an excessive flow rate of a hydraulic fluid discharged from the hydraulic pump when a work apparatus or a traveling apparatus is finely manipulated during a combined operation in a pipe-laying operation mode, thereby improving manipulability.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a circuit diagram showing a conventional hydraulic circuit for a pipe layer in accordance with the prior art; and
Figs. 2 (a) and 2(b) are graphs showing the operational characteristics of an unloading valve in a conventional hydraulic circuit for a pipe layer in accordance with the prior art;
Fig. 3 is a circuit diagram showing a hydraulic circuit for a pipe layer in accordance with an embodiment of the present invention;
Fig. 4 is a cross-sectional view showing an unloading valve which is in a neural state in a hydraulic circuit for a pipe layer in accordance with an embodiment of the present invention;
Fig. 5 is a circuit diagram showing an unloading valve in a hydraulic circuit for a pipe layer in accordance with an embodiment of the present invention; and
Figs. 6(a) and 6(b) are graphs showing the operational characteristics of an unloading valve in a hydraulic circuit for a pipe layer in accordance with an embodiment of the present invention;

### * Explanation on reference numerals of main elements in the drawings *

1: engine
3,5,7: control valve
9: straight traveling valve
13: operation mode switching valve
16: main control valve (MCV)
24: center bypass (cbp) spool
30,40: attachment switching device
50,50a: unloading valve
53,53a: valve spool
54,54a: poppet
55: notch portion
a,b: swash plate
P1: first hydraulic pump
P2: second hydraulic pump
P3: pilot pump

### PREFERRED EMBODIMENTS OF THE INVENTION

Now, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

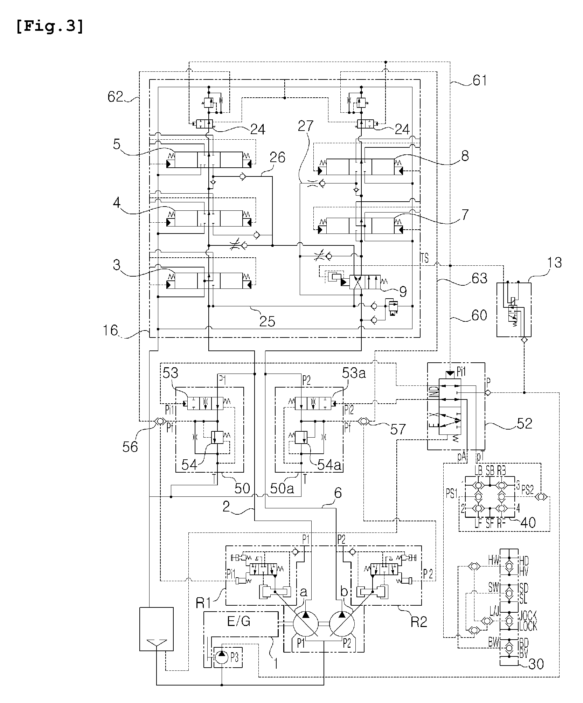

A hydraulic circuit for a pipe layer, in which a discharge flow rate of a hydraulic pump is controlled by a negative flow control system in accordance with an embodiment of the present invention as shown in Figs. 3 to 5 includes:
first and second variable displacement hydraulic pumps (hereinafter, referred to as "first and second hydraulic pumps") P1 and P2 and a pilot pump P3, which are configured to be connected to an engine 1;
a plurality of first control valves 3, 4 and 5 installed in a center bypass path 2 of the first hydraulic pump P1 and configured to be shifted to control a flow direction and a flow rate of a hydraulic fluid that is supplied to a left traveling motor and a first work apparatus (or a swing motor, a winch motor, or the like);
a plurality of second control valves 7 and 8 installed in a center bypass path 6 of the second hydraulic pump P2 and configured to be shifted to control a flow direction and a flow rate of a hydraulic fluid that is supplied to a right traveling motor and a second work apparatus (or a boom cylinder or the like) ;
a straight traveling valve 9 installed at the upstream side of the center bypass path 6 of the second hydraulic pump P2, and configured to be shifted by a pilot signal pressure from the pilot pump P3 to cause the hydraulic fluid discharged from the first hydraulic pump P1 to be distributed and supplied to the control valves 3 and 7 for the left and right traveling motors and to cause the hydraulic fluid discharged from the second hydraulic pump P2 to be distributed and supplied to the control valves 4, 5 and 8 for the first and second work apparatuses when a combined operation mode for simultaneously driving the work apparatus and a traveling apparatus is selected;
a pair of unloading valves 50 and 50a configured to linearly control the closing of a flow path extending from the center bypass paths 2 and 6 of the first and second hydraulic pumps P1 and P2 to a hydraulic tank when the work apparatus or the traveling apparatus is finely manipulated in a pipe-laying operation mode;
a pilot valve 52 configured to be shifted by the pilot signal pressure for shifting the straight traveling value to cause a signal pressure that corresponds to a manipulation signal of the traveling apparatus to be supplied to the unloading valve 50 to close the flow path extending from the center bypass path 2 of the first hydraulic pump P1 to the hydraulic tank and to cause a signal pressure that corresponds to a manipulation signal of the work apparatus to be supplied to the unloading valve 50a to close the flow path extending from the center bypass path 6 of the second hydraulic pump P2 to the hydraulic tank T; and
an operation mode switching valve 13 configured to be shifted in response to an electrical signal applied thereto from the outside when a combined operation mode for simultaneously driving the work apparatus and the traveling apparatus is selected to cause the pilot signal pressure from the pilot pump P3 to be supplied to the straight traveling valve 9, the pilot valve 52, and valve spools (referring to the cbp spools) 24 installed at a downstream side of the center bypass paths 2 and 6 of the first and second hydraulic pumps P1 and P2, respectively.

In this case, the unloading valve 50 or 50a includes: a valve spool 53 or 53a configured to be shifted by a pilot signal pressure from the outside to linearly control the cross-sectional area of the closed aperture of the flow path extending in fluid communication from the center bypass path 2 or 6 of the first or second hydraulic pumps P1 or P2 to the hydraulic tank T; and a poppet (called "negative poppet") 54 or 54a installed in a flow path between an outlet port of the valve spool 53 or 53a and the hydraulic tank to open/close the flow path extending from the center bypass path 2 or 6 of the first or second hydraulic pump P1 or P2 to the hydraulic tank T by a pressure formed in the center bypass path 2 or 6 of the first and second hydraulic pump P1 or P2.

The unloading valve 50 or 50a further includes a notch portion 55 or 55a formed at the valve spool 53 or 53a and configured to linearly control the closing of the flow path extending from the center bypass path 2 or 6 of the first or second hydraulic pump P1 or P2 to the hydraulic tank T when an attachment is minutely operated in the pipe-laying operation mode.

The hydraulic circuit for a pipe layer further includes: a first shuttle valve 56 configured to allow a swivel angle of a swash plate a of the first hydraulic pump P1 to be controlled by a pressure selected from among a pilot signal pressure 1pf at the unloading valve 50 side and a pressure at the downstream side of the center bypass path 2 of the first hydraulic pump P1; and a second shuttle valve 57 configured to allow a swivel angle of a swash plate of the second hydraulic pump P2 to be controlled by a pressure selected from among a pilot signal pressure 2pf at the unloading valve 50a and a pressure at the downstream side of the center bypass path 6 of the second hydraulic pump P2.

Likewise, the configuration of the hydraulic circuit in which it includes the first and second hydraulic pumps P1 and P2 connected to the engine, the main control valve (MCV) 16, the operation mode switching valve 13, and attachment switching devices 30 and 40 is substantially the same as that of the hydraulic circuit shown in Fig. 1, and thus the detailed description of the configuration and operation thereof will be omitted avoid redundancy. The same elements are denoted by the same reference numerals.

Hereinafter, a use example of the hydraulic circuit for a pipe layer in accordance with an embodiment of the present invention will be described in detail with reference to the accompanying drawings.

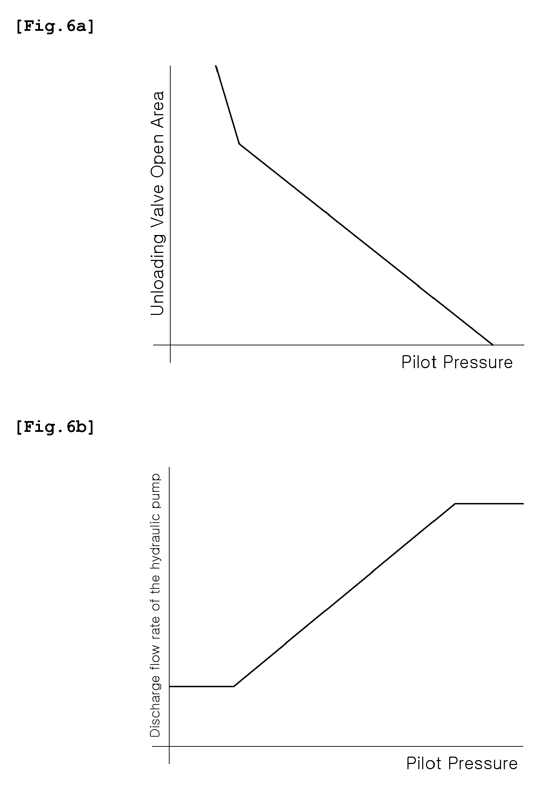

As shown in Figs. 3 to 6(a) and 6(b), when a pipe-laying operation mode is selected by an operator, the operation mode switching valve 13 is shifted to the top on the drawing sheet to cause a part of the pilot signal pressure discharged from the pilot pump P3 to be supplied to the straight traveling valve 9 through a port Ts of the main control valve 16 via the shifted operation mode switching valve 13 to shift a spool of the straight traveling valve 9 to the right on the drawing sheet (Fig. 3 shows a state in which the operation mode switching valve 13 and the spool of the straight traveling valve 9 have been shifted). Simultaneously, a part of the pilot signal pressure is supplied to the pilot valve 52 via a flow path 60 to cause a spool of the pilot valve 52 to be shifted to the bottom on the drawing sheet (Fig. 3 shows a state in which the spool of the pilot valve 52 has been shifted), and a part of the pilot signal pressure is supplied to the main control valve 16 via a flow path 61 to cause the valve spool (or cbp spool) 24 to be shifted to block the center bypass paths 2 and 6 of the first and second hydraulic pumps P1 and P2, respectively.

When the straight traveling valve 9 is shifted, a part of the hydraulic fluid discharged from the first hydraulic pump P1 is supplied to the control valve 3 through the center bypass path 2 to drive the left traveling motor. At the same time, a part of the hydraulic fluid discharged from the first hydraulic pump P1 is supplied to the control valve 7 through the straight traveling valve 9 via the flow path 25 to drive the right traveling motor.

On the other hand, a part of the hydraulic fluid discharged from the second hydraulic pump P2 is supplied to the control valves 4 and 5 through the straight traveling valve 9 via the center bypass path 6 and the flow path 26 to drive the swing motor and the winch motor. At the same time, a part of the hydraulic fluid discharged from the second hydraulic pump P2 is supplied to the control valve 8 via the center bypass path 6 and the flow path 27 to drive the boom cylinder. In this case, the hydraulic fluid discharged from the second hydraulic pump P2 hardly flows into the control valve 7.

The aforementioned first and second hydraulic pumps P1 and P2 causes an overload due to generation of high pressure in the center bypass paths 2 and 6 blocked by the shift of the spool 24. At this time, the pilot signal pressure from the pilot pump P3 is blocked at a point P of the pilot valve 52, and a manipulation signal Pi from the attachment switching device (30: a work apparatus manipulation signal, and 40: a traveling apparatus manipulation signal) is not supplied to the unloading valves 50 and 50a through the pilot valve 52.

For this reason, the unloading valves 50 and 50a are maintained in an opened state by a valve spring, and thus the hydraulic fluid discharged from the first and second hydraulic pumps P1 and P2 is supplied to the hydraulic tank T via the unloading valves 50 and 50a after passing through the center bypass paths 2 and 6 and ports P1 and P2 of the unloading valves 50 and 50a.

At the same time, higher pressures Pi1 and Pi2 selected from among a signal pressure outputted from the main control valve 16 and supplied to the first and second shuttle valves 56 and 57 through the flow paths 62 and 63, and a signal pressure Pf supplied to the first and second shuttle valves 56 and 57 at the unloading valves 50 and 50a are supplied to regulators R1 and R2 of the first and second hydraulic pumps P1 and P2, respectively. As a result, the swivel angels of the swash plates a and b of the first and second hydraulic pumps P1 and P2 are controlled, and thus a flow rate of the hydraulic fluid discharged from the first and second hydraulic pumps P1 and P2 is controlled to be minimized, thereby preventing occurrence of an overload.

In the meantime, in the case where a manipulation signal pressure (1-40kg/cm²) is applied through a port Ps2 (or a port Ps1) to correspond to a manipulation of the attachment switching device (40: traveling apparatus manipulation signal), it is supplied to a port Pi of the unloading valve 50 through the shifted pilot valve 52 to shift the spool of the unloading valve 50 to the right on the drawing sheet. Thus, the flow rate of the hydraulic fluid introduced into the unloading valve 50 from the center bypass path 2 of the first hydraulic pump P1 through the port P1 and supplied to the hydraulic tank T is gradually decreased.

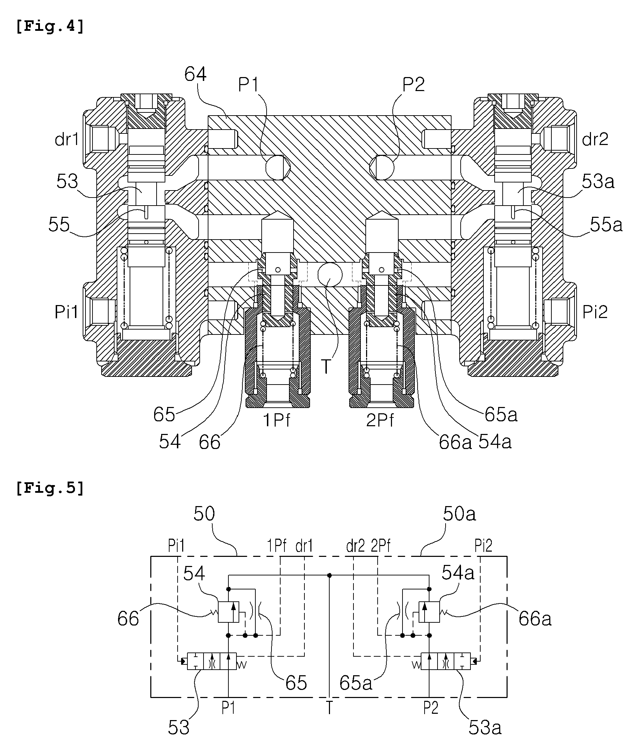

As described above, a gradual decrease in a flow rate of the hydraulic fluid supplied to the hydraulic tank T from the from the center bypass path 2 of the first hydraulic pump P1 via the unloading valve 50 will be described hereinafter with reference to FIGs. 4 and 5.

As shown in FIG. 4, the hydraulic fluid discharged from the first hydraulic pump P1 is introduced into a port P1 of a valve block 64 through the port P1 of the unloading valve 50 fludically communicating with the center bypass path 2. The introduced hydraulic fluid into the valve block 64 flows toward the hydraulic tank T while passing through the valve spool 53 and the orifice 65 of the poppet 54. At this time, the pressure of the hydraulic fluid discharged from the first hydraulic pump P1 rises, so that if the pressure of the hydraulic fluid is larger than an elastic force (or spring force) of a valve spring 66, the poppet 54 is shifted to the bottom on the drawing sheet to cause the hydraulic fluid discharged from the first hydraulic pump P1 to be supplied to the hydraulic tank T through the completely opened poppet 54.

In this case, the manipulation signal pressure (1-40kg/cm²) applied through a port Ps2 (or a port Ps1) to correspond to a manipulation of the attachment switching device (40: traveling apparatus manipulation signal) is supplied to the port Pi of the unloading valve 50 through the shifted pilot valve 52 to slowly shift the spool of the unloading valve 50 to the top on the drawing sheet. As a result, a flow path along which the hydraulic fluid passing through the port P1 of the valve block 64 flows toward the hydraulic tank T is closed gradually. In this case, a cross-sectional area of a closed aperture of the flow path of the unloading valve 50 is linearly controlled by the notch portion 55 formed at the valve spool 53. As a result, a flow rate of the hydraulic fluid introduced into the unloading valve 50 from the center bypass path 2 of the first hydraulic pump P1 through the port P1 and then flowing toward the hydraulic tank T is gradually decreased.

It can be found that the cross-sectional area of the closed aperture of the flow path of the unloading valve 50 is gradually decreased along with an increase in the pilot signal pressure Pi1 supplied to the unloading valve 50 (see FIG. 6(a)). Thus, it can be found that the flow rate of the hydraulic discharged from the first hydraulic pump P1 to correspond to the pilot signal pressure is linearly increased (see FIG. 6(a)).

In the meantime, the unloading valves 50 and 50a are formed in a left and right symmetrical structure shape and are operated in the same manner. For this reason, in the present specification, a description has been given of only the unloading valve 50 installed in the flow path fluidically communicating with the hydraulic tank T in the center bypass path 2 of the first hydraulic pump P1. Thus, the unloading valve 50a connected to the center bypass path 6 of the second hydraulic pump P2 has been omitted to avoid redundancy, and in the unloading valve 50a, all the elements which correspond to those of the unloading valve 50 are designated by the same reference numeral with a symbol "a" suffixed.

### INDUSTRIAL APPLICABILITY

As described above, according to the hydraulic circuit for a pipe layer in accordance with an embodiment of the present invention, in the hydraulic circuit for a pipe layer to which a negative flow control system is applied, it is possible to prevent chattering and occurrence of hydraulic shock in equipment due to a pressure rise caused by an excessive flow rate of a hydraulic fluid discharged from the hydraulic pump when a work apparatus or a traveling apparatus is finely manipulated during a combined operation in a pipe-laying operation mode, thereby improving manipulability.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the scope of the present invention. Therefore, the true technical scope of the present invention should not be defined by the above-mentioned embodiments but should be defined by the appended claims.

## Claims

1. A hydraulic circuit for a pipe layer, in which a discharge flow rate of a hydraulic pump is controlled by a negative flow control system, the hydraulic circuit comprising:
first and second hydraulic pumps (P1, P2) and a pilot pump (P3), which are configured to be connected to an engine (1);
one or more first control valves (3, 4, 5) installed in a center bypass path (2) of the first hydraulic pump (P1) and configured to be shifted to control a flow direction and a flow rate of a hydraulic fluid that is supplied to a left traveling motor and a first work apparatus;
one or more second control valves (7, 8) installed in a center bypass path (6) of the second hydraulic pump (P2) and configured to be shifted to control a flow direction and a flow rate of a hydraulic fluid that is supplied to a right traveling motor and a second work apparatus;
a straight traveling valve (9) installed at the upstream side of the center bypass path (6) of the second hydraulic pump (P2), and configured to be shifted by a pilot signal pressure from the pilot pump (P3) to cause the hydraulic fluid discharged from the first hydraulic pump (P1) to be distributed and supplied to the control valves (3, 7) for the left and right traveling motors and to cause the hydraulic fluid discharged from the second hydraulic pump (P2) to be distributed and supplied to the control valves (4, 5, 8) for the first and second work apparatuses when a combined operation mode for simultaneously driving the work apparatus and a traveling apparatus is selected;
**characterized in that**,
a pair of unloading valves (50, 50a) is configured to linearly control the closing of a flow path extending from the center bypass paths (2, 6) of the first and second hydraulic pumps (P1, P2) to a hydraulic tank (T) when the work apparatus or the traveling apparatus is finely manipulated in a pipe-laying operation mode;
a pilot valve (52) is configured to be shifted by the pilot signal pressure for shifting the straight traveling valve (9) to cause a signal pressure that corresponds to a manipulation signal of the traveling apparatus to be supplied to the unloading valve (50) to close the flow path extending from the center bypass path (2) of the first hydraulic pump (P1) to the hydraulic tank (T) and to cause a signal pressure that corresponds to a manipulation signal of the work apparatus to be supplied to the unloading valve (50a) to close the flow path extending from the center bypass path (6) of the second hydraulic pump (P2) to the hydraulic tank (T); and
an operation mode switching valve (13) is configured to be shifted in response to an electrical signal applied thereto from the outside when a combined operation mode for simultaneously driving the work apparatus and the traveling apparatus is selected to cause the pilot signal pressure from the pilot pump (P3) to be supplied to the straight traveling valve (9), the pilot valve (52), and valve spools (24) installed at a downstream side of the center bypass paths (2, 6) of the first and second hydraulic pumps (P1, P2), respectively.

2. The hydraulic circuit for a pipe layer according to claim 1, wherein each of the unloading valve (50, 50a) comprises:
a valve spool (53, 53a) configured to be shifted by a pilot signal pressure from the outside to linearly control the cross-sectional area of the closed aperture of the flow path extending in fluid communication from the center bypass path (2, 6) of the first or second hydraulic pump (P1, P2) to the hydraulic tank (T); and
a poppet (54, 54a) installed in a flow path between an outlet port of the valve spool (53, 53a) and the hydraulic tank (T) to open/close the flow path extending from the center bypass path (2, 6) of the first or second hydraulic pump (P1, P2) to the hydraulic tank (T) by a pressure formed in the center bypass path (2, 6) of the first or second hydraulic pump (P1, P2).

3. The hydraulic circuit for a pipe layer according to claim 2, further comprising a notch portion (55, 55a) formed at the valve spool (53, 53a) and configured to linearly control the closing of the flow path extending from the center bypass path (2, 6) of the first or second hydraulic pump (P1, P2) to the hydraulic tank (T) when an attachment is minutely operated in the pipe-laying operation mode.

4. The hydraulic circuit for a pipe layer according to claim 1, further comprising:
a first shuttle valve (56) configured to control a swivel angle of a swash plate (a) of the first hydraulic pump (P1) by a pressure selected from among a pilot signal pressure (1pf) at the unloading valve side (50) and a pressure at the downstream side of the center bypass path (2) of the first hydraulic pump (P1); and
a second shuttle valve (57) configured to control a swivel angle of a swash plate (b) of the second hydraulic pump (P2) by a pressure selected from among a pilot signal pressure (2pf) at the unloading valve (50a) and a pressure at the downstream side of the center bypass path (6) of the second hydraulic pump (P2).

## Patentansprüche

1. Hydraulikkreislauf für eine Rohrleitungsschicht, bei der eine Ausbringungs-Durchflussrate einer Hydraulikpumpe durch ein Rückflusssteuerungssystem gesteuert wird, der Hydraulikkreislauf umfassend:
erste und zweite hydraulische Pumpen (P1, P2) und eine Pilotpumpe (P3), die konfiguriert sind, mit einem Motor (1) verbunden zu sein;
ein oder mehr erste Steuerventile (3, 4, 5), die in einem zentralen Umgehungspfad (2) der ersten Hydraulikpumpe (P1) installiert sind, und konfiguriert sind, verschoben zu werden, um eine Strömungsrichtung und eine Durchflussrate eines Hydraulikfluids zu steuern, das einem linken Verlagerungsmotor und einer ersten Arbeitsvorrichtung zugeführt wird;
ein oder mehr zweite Steuerventile (7, 8), die in einem zentralen Umgehungspfad (6) der zweiten Hydraulikpumpe (P2) installiert sind und konfiguriert sind, verschoben zu werden, um eine Strömungsrichtung und eine Durchflussrate eines Hydraulikfluids zu steuern, das einem rechten Verlagerungsmotor und einer zweiten Arbeitsvorrichtung zugeführt wird;
ein gerades Verlagerungsventil (9), das dem zentralen Umgehungspfad (6) der zweiten Hydraulikpumpe (P2) vorgeschaltet ist, und konfiguriert ist, durch einen Pilotsignaldruck von der Pilotpumpe (P3) verschoben zu werden, um das von der ersten Hydraulikpumpe (P1) ausgebrachte Hydraulikfluid dazu zu veranlassen, an die Steuerventile (3, 7) für die linken und rechten Verlagerungsmotoren verteilt und zugeführt zu werden, und das von der zweiten Hydraulikpumpe (P2) ausgebrachte Hydraulikfluid dazu zu veranlassen, an die Steuerventile (4, 5, 8) für die ersten und zweiten Arbeitsvorrichtungen verteilt und zugeführt zu werden, wenn ein kombinierter Betriebsmodus zum gleichzeitigen Antreiben der Arbeitsvorrichtung und einer Verlagerungsvorrichtung ausgewählt ist;
**dadurch gekennzeichnet, dass**
ein Paar Entlastungsventile (50, 50a) konfiguriert ist, das Schließen eines Strömungspfads, der sich von den zentralen Umgehungspfaden (2, 6) der ersten und zweiten Hydraulikpumpe (P1, P2) an einen Hydrauliktank (T) erstreckt, linear zu steuern, wenn die Arbeitsvorrichtung oder die Verlagerungsvorrichtung genau in einen Rohrverlegungsbetriebsmodus gesteuert wird;
ein Pilotventil (52) konfiguriert ist, durch den Pilotsignaldruck zum Verschieben des geraden Verlagerungsventils (9) verschoben zu werden, um einen Signaldruck, der einem Bedienungssignal der Verlagerungsvorrichtung entspricht, dazu zu veranlassen, dem Entlastungsventil (50) zugeführt zu werden, um den Strömungspfad zu schließen, der sich von dem zentralen Umgehungspfad (2) der ersten Hydraulikpumpe (P1) zu dem Hydrauliktank (T) erstreckt, und einen Signaldruck, der einem Bedienungssignal der Arbeitsvorrichtung entspricht, dazu zu veranlassen, dem Entlastungsventil (50a) zugeführt zu werden, um den Strömungspfad zu schließen, der sich von dem zentralen Umgehungspfad (6) der zweiten Hydraulikpumpe (T) bis zu dem Hydrauliktank (T) erstreckt; und
und ein Betriebsmodus-Schaltventil (13)ist konfiguriert, als Reaktion auf ein elektrisches Signal verschoben zu werden, dass diesem von außen angelegt wird, wenn ein kombinierter Betriebsmodus zum gleichzeitigen Antreiben der Arbeitsvorrichtung und der Verlagerungsvorrichtung ausgewählt ist, um den Pilotsignaldruck von der Pilotpumpe (P3) dazu zu veranlassen, an das gerade Verlagerungsventil (9) zugeführt zu werden, wobei das Pilotventil (52), und Ventilschieber (24) den zentralen Umgehungspfaden (2, 6) der ersten bzw. zweiten Hydraulikpumpen (P1, P2) nachgeordnet installiert sind.

2. Hydraulikkreislauf für eine Rohrleitungsschicht gemäß Anspruch 1, wobei jedes der Entlastungsventile (50, 50a) aufweist:
einen Ventilschieber (53, 53a), der konfiguriert ist, durch einen Pilotsignaldruck von außen verschoben zu werden, um die Querschnittsfläche der geschlossenen Öffnung des Strömungspfads, der sich in Fluidkommunikation von dem zentralen Umgehungspfad (2, 6) der ersten und zweiten Hydraulikpumpe (P1, P2) bis zu dem Hydrauliktank (T) erstreckt, linear zu steuern; und
ein Tellerventil (54, 54a), das in einem Strömungspfad zwischen einer Auslassöffnung des Ventilschiebers (53, 53a) und dem Hydrauliktank (T) installiert ist, um den Strömungspfad, der sich von dem zentralen Umgehungspfad (2, 6) der ersten oder zweiten Hydraulikpumpe (P1, P2) bis zu dem Hydrauliktank (T) erstreckt, durch einen Druck zu öffnen/schließen, der in dem zentralen Umgehungspfad (2, 6) der ersten oder zweiten Hydraulikpumpe (P1, P2) aufgebaut wird.

3. Hydraulikkreislauf für eine Rohrleitungsschicht gemäß Anspruch 2, ferner aufweisend einen Kerbabschnitt (55, 55a), der an dem Ventilschieber (53, 53a) ausgebildet ist und konfiguriert ist, das Schließen des Strömungspfads, der sich von dem zentralen Umgehungspfad (2, 6) der ersten oder zweiten Hydraulikpumpe (P1, P2) bis zu dem Hydrauliktank (T) erstreckt, linear zu steuern, wenn eine Anbringung in dem Rohrverlegungsbetriebsmodus genau betrieben wird.

4. Hydraulikkreislauf für eine Rohrleitungsschicht gemäß Anspruch 1, ferner aufweisend:
ein erstes Wechselventil (56), das konfiguriert ist, einen Schwenkwinkel einer Taumelscheibe (a) der ersten Hydraulikpumpe (P1) durch einen Druck zu steuern, der aus einem Pilotsignaldruck (1pf) an der Entlastungsventilseite (50) und einem Druck an der dem zentralen Umgehungspfad (2) der ersten Hydraulikpumpe (P1) nachgeordneten Seite ausgewählt ist; und
ein zweites Wechselventil (57), das konfiguriert ist, einen Schwenkwinkel einer Taumelscheibe (b) der zweiten Hydraulikpumpe (P2) durch einen Druck zu steuern, der aus einem Pilotsignaldruck (2pf) an dem Entlastungsventil (50a) und einem Druck an der dem zentralen Umgehungspfad (6) der zweiten Hydraulikpumpe (P2) vorgelagerten Seite ausgewählt ist.

## Revendications

1. Circuit hydraulique pour un poseur de tuyaux, dans lequel un débit d'évacuation d'une pompe hydraulique est commandé par un système de commande d'écoulement négatif, le circuit hydraulique comprenant :
des première et seconde pompes hydrauliques (P1, P2) et une pompe pilote (P3), qui sont configurées pour être reliées à un moteur (1) ;
une ou plusieurs premières vannes de commande (3, 4, 5) installées dans un passage de dérivation central (2) de la première pompe hydraulique (P1) et configurées pour être déplacées afin de commander une direction d'écoulement et un débit d'un fluide hydraulique qui est alimenté vers un moteur mobile gauche et un premier appareillage de travail ;
une ou plusieurs secondes vannes de commande (7, 8) installées dans un passage de dérivation central (6) de la seconde pompe hydraulique (P2) et configurées pour être déplacées afin de commander une direction d'écoulement et un débit d'un fluide hydraulique qui est alimenté vers un moteur mobile droite et un second appareillage de travail ;
une vanne mobile droite (9) installée sur le côté amont du passage de dérivation central (6) de la seconde pompe hydraulique (P2), et configurée pour être déplacée par une pression de signal pilote provenant de la pompe pilote (P3) afin de provoquer la distribution et l'alimentation du fluide hydraulique évacué de la première pompe hydraulique (P1) vers les vannes de commande (3, 7) pour les moteurs mobiles gauche et droite et afin de provoquer la distribution et l'alimentation du fluide hydraulique évacué de la seconde pompe hydraulique (P2) vers les vannes de commande (4, 5, 8) pour les premier et second appareils de travail lorsqu'un mode de fonctionnement combiné pour entrainer simultanément l'appareil de travail et un appareil mobile est sélectionné ;
**caractérisé en ce que**,
une paire de vannes de déchargement (50, 50a) est configurée pour commander linéairement la fermeture d'un trajet d'écoulement s'étendant des passages de dérivation centraux (2, 6) de la première ou la seconde pompes hydrauliques (P1, P2) vers un réservoir hydraulique (T) lorsque l'appareil de travail ou l'appareil mobile est manipulé de manière fine dans un mode de fonctionnement de pose de tuyaux ;
une vanne pilote (52) est configurée afin d'être déplacée par la pression de signal pilote pour déplacer la vanne mobile droite (9) afin de provoquer la livraison d'une pression de signal qui correspond à un signal de manipulation de l'appareil mobile à la vanne de déchargement (50) pour fermer le trajet d'écoulement s'étendant du passage de dérivation central (2) de la première pompe hydraulique (P1) vers le réservoir hydraulique (T) et afin de provoquer la livraison d'une pression de signal qui correspond à un signal de manipulation de l'appareil de travail à la vanne de déchargement (50a) pour fermer le trajet d'écoulement s'étendant du passage de dérivation central (6) de la seconde pompe hydraulique (P2) vers le réservoir hydraulique (T) ; et
une vanne d'aiguillage de mode fonctionnel (13) est configurée afin d'être déplacée en réponse à un signal électrique appliqué sur celle-ci du côté extérieur, lorsqu'un mode fonctionnel combiné pour l'entrainement simultané de l'appareil de travail et de l'appareil mobile est sélectionné afin de provoquer la livraison de la pression de signal pilote provenant de la pompe pilote (P3) à la vanne mobile droite (9), à la vanne pilote (52), et aux tiroirs de vanne (24) installés respectivement sur un côté aval des passages de dérivation centraux (2, 6) des première et seconde pompes hydrauliques (P1, P2).

2. Circuit hydraulique pour un poseur de tuyaux selon la revendication 1, dans lequel chacune des vannes de déchargement (50, 50a) comprend :
un tiroir de vanne (53, 53a) configuré afin d'être déplacé par une pression de signal pilote provenant de l'extérieur pour commander linéairement la zone à section transversale de l'ouverture fermée du trajet d'écoulement s'étendant en communication fluide du passage de dérivation central (2, 6) de la première ou de la seconde pompe hydraulique (P1, P2) vers le réservoir hydraulique (T) ; et
un champignon (54, 54a) installé dans un trajet d'écoulement entre un orifice de sortie du tiroir de vanne (53, 53a), et le réservoir hydraulique (T) pour ouvrir / fermer le trajet d'écoulement s'étendant du passage de dérivation central (2, 6) de la première ou de la seconde pompe hydraulique (P1, P2) vers le réservoir hydraulique (T) par une pression formée dans le passage de dérivation central (2, 6) de la première ou de la seconde pompe hydraulique (P1, P2).

3. Circuit hydraulique pour un poseur de tuyaux selon la revendication 2, comprenant par ailleurs une partie à crans (55, 55a) formée sur le tiroir de vanne (53, 53a) et configurée pour commander linéairement la fermeture du trajet d'écoulement s'étendant du passage de dérivation central (2, 6) de la première ou la seconde pompe hydraulique (P1, P2) au réservoir hydraulique (T) lorsqu'une fixation est effectuée avec précision au mode fonctionnel de pose de tuyaux.

4. Circuit hydraulique pour un poseur de tuyaux selon la revendication 1, comprenant en outre :
Une première soupape à deux voies (56) configurée pour commander un angle de pivotement d'un disque en nutation (a) de la première pompe hydraulique (P1) par une pression sélectionnée parmi une pression de signal pilote (1pf) sur le côté de la vanne de déchargement (50) et une pression sur le côté aval du passage de dérivation central (2) de la première pompe hydraulique (P1) ; et
une seconde soupape à deux voies (57) configurée pour commander un angle de pivotement d'un disque en nutation (b) de la seconde pompe hydraulique (P2) par une pression sélectionnée parmi une pression de signal pilote (2pf) sur la vanne de déchargement (50a) et une pression sur le côté aval du passage de dérivation central (6) de la seconde pompe hydraulique (P2).
